# EUROPÄISCHE PATENTANMELDUNG

(11) **EP 4 391 272 A1**
(43) Veröffentlichungstag der Anmeldung: **26.06.2024**
(21) Anmeldenummer: 23218287.3
(22) Anmeldetag: 19.12.2023
(51) Int. Cl.: H02J 3/26, H02J 3/32

(54) **VERFAHREN ZUM ENERGIEMANAGEMENT BEIM BEREITSTELLEN VON ELEKTRISCHER ENERGIE, COMPUTERPROGRAMMPRODUKT, SYSTEM, SOWIE FAHRZEUG**

(30) Priorität: 23.12.2022 DE 102022134783
(71) Anmelder: Mitteldeutsche Netzgesellschaft Strom mbH, 06184 Kabelsketal (DE)
(72) Erfinder: Noske, Tino, 09117 Chemnitz (DE); Haase, Sven, 09430 Drebach (DE)
(74) Vertreter: Bals & Vogel Patentanwälte PartGmbB

(57) **Zusammenfassung**

Die Erfindung betrifft ein Verfahren (100) zum Energiemanagement bei einem Bereitstellen von elektrischer Energie über mehrere Phasenleiter (11) einer Stromrichtervorrichtung (10) mit einer mehrphasig ansteuerbaren Leistungselektronik (12), die über die Phasenleiter (11) an ein Stromnetz (20) angeschlossen ist, umfassend Erfassen (101) jeweils zumindest einer phasenspezifischen Leistungsgröße (200) für jeden der Phasenleiter (11) beim Bereitstellen der Energie. Ferner betrifft die Erfindung ein Computerprogrammprodukt, ein System (1), sowie ein Fahrzeug (30).

## Beschreibung

Die Erfindung betrifft ein Verfahren zum Energiemanagement bei einem Bereitstellen von Energie über mehrere Phasenleiter, ein Computerprogrammprodukt, ein System, sowie ein Fahrzeug.

Der Energieabgriff in Haushalten erfolgt üblicherweise über einen mehrphasigen Hausanschluss. Bei bekannten Verfahren zielt dabei z. B. ein mehrphasiges Laden bzw. Entladen auf eine möglichst phasensymmetrische Energieentnahme ab. Der Lade- bzw. Entladevorgang selbst wird innerhalb eines Haushalts in Hinblick auf die symmetrische Energieentnahme gesteuert. Die Steuerung der phasenbezogenen Entnahmeleistung wird dabei so vorgenommen, dass an einem definierten Übergabepunkt möglichst phasensymmetrisch Energie bezogen oder zurück gespeist wird.

Allerdings ist i. d. R. insgesamt eine grundsätzliche Last- und Spannungsunsymmetrie im Niederspannungsverteilungsnetz systemimmanent, da die meisten Geräte im Haushalt einphasig angeschlossen sind oder, wie im Fall von vielen Elektroherden, trotz dreiphasigem Anschluss ein unsymmetrisches Lastprofil erzeugen können. Die Spannungsunsymmetrie ist daher nicht oder nur unzureichend vorherbestimmbar und i. d. R. zeitlich veränderlich. Im ungünstigsten Fall können bei einer einphasigen Netzbelastung bis zu 85% der Netzübertragungsfähigkeit für die Nutzung verloren werden.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung bei einem mehrphasigen Bereitstellen von Energie über mehrere Phasenleiter eine Spannungsqualität in einem elektrischen Energieverteilnetz in stabiler Art und Weise zu verbessern.

Die voranstehende Aufgabe wird gelöst durch ein Verfahren mit den Merkmalen des Anspruchs 1, ein Computerprogrammprodukt mit den Merkmalen des Anspruchs 13, ein System mit den Merkmalen des Anspruchs 14, sowie ein Fahrzeug mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt, dem erfindungsgemäßen System und/oder dem erfindungsgemäßen Fahrzeug und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist ein Verfahren zum Energiemanagement bei einem Bereitstellen von elektrischer Energie über eine Stromrichtervorrichtung mit einer mehrphasig ansteuerbaren Leistungselektronik, die über mehrere Phasenleiter an ein Stromnetz angeschlossen ist, vorgesehen. Das Verfahren umfasst, insbesondere in Form von Verfahrensschritten:
- Erfassen jeweils zumindest einer phasenspezifischen Leistungsgröße für jeden der Phasenleiter beim Bereitstellen der Energie, insbesondere durch phasenspezifische Sensoren zum Messen von Leistungsgrößen und/oder eine Steuereinheit,
- Erkennen einer Abweichung von einer symmetrischen Belastung der Phasenleiter anhand der Leistungsgrößen und zumindest einer netzspezifischen Grenzbedingung für die Abweichung, insbesondere durch die Steuereinheit,
- Bestimmen von Leistungsdaten, die für jeden der Phasenleiter eine abzurufende Sollleistung umfassen, in Abhängigkeit von der Abweichung, insbesondere durch die Steuereinheit,
- Ansteuern der Leistungselektronik der Stromrichtervorrichtung in Abhängigkeit von den Leistungsdaten, insbesondere durch die Steuereinheit.

Bei dem Stromnetz kann es sich beispielsweise um ein öffentliches und/oder regionales Stromnetz oder ein privates und/oder lokales Stromnetz, wie z. B. ein Stromnetz innerhalb einer Wohnanlage und/oder einer Industrieanlage, handeln. Vorzugsweise kann das Stromnetz ein Niederspannungsdrehstromnetz, insbesondere mit einer Spannung von 400 V, umfassen.

Die Leistungselektronik Stromrichtervorrichtung kann beispielsweise einen Gleichrichter zum Erzeugen von Gleichstrom aus einem über die Phasenleiter bereitgestellten Wechselstrom umfassen. Unter der mehrphasigen Ansteuerbarkeit der Leistungselektronik kann insbesondere verstanden werden, dass die Leistungselektronik dazu ausgebildet ist, die phasenspezifischen Leistungsgrößen unabhängig und/oder separat voneinander anzusteuern und/oder einzustellen. Vorzugsweise kann die Stromrichtervorrichtung in einen Verbraucher, für welchen die Energie bereitgestellt wird, und/oder einen Erzeuger, durch welchen Energie bereitgestellt wird, integriert oder dem Verbraucher und/oder dem Erzeuger vorgeschaltet sein. Beispielsweise kann die Stromrichtervorrichtung in ein Gleichstrom-Ladegerät zum Laden eines Fahrzeuges, insbesondere in einer Wall-Box und/oder in dem Fahrzeug, integriert sein. Es ist jedoch ebenso denkbar, dass das Bereitstellen der Energie für einen anderen Verbraucher mit einem Gleichstromzwischenkreis, wie z. B. eine Industriemaschine, erfolgt. Der Erzeuger kann eine lokale Anlage zur, insbesondere regenerativen, Energieerzeugung, beispielsweise in Form einer Photovoltaik-Anlage, einer Windkraftanlage und/oder dergleichen, umfassen.

Die Leistungsgrößen können vorzugsweise in Form einer elektrischen Leistung erfasst werden. Beim Erfassen der phasenspezifischen Leistungsgrößen können die Leistungsgrößen insbesondere gemessen oder von einer Messeinheit abgerufen werden. Unter den Phasenleitern können insbesondere elektrische Leitungen verstanden werden, über welche die Energie beim Entnehmen der Energie aus dem Stromnetz und/oder beim Rückspeisen von Energie in das Stromnetz als mehrphasiger Wechselstrom bereitgestellt wird. Vorzugsweise kann die Stromrichtervorrichtung zwei Phasenleiter für einen zweiphasigen Betrieb der Stromrichtervorrichtung oder drei Phasenleiter für einen dreiphasigen Betrieb der Stromrichtervorrichtung aufweisen. Zusätzlich zu den Phasenleitern kann die Stromrichtervorrichtung zumindest einen Neutralleiter, insbesondere auch Nullleiter genannt, aufweisen. Die phasenspezifischen Leistungsgrößen können vorzugsweise eine Spannung und/oder eine Stromstärke am jeweiligen Phasenleiter umfassen.

Unter einer unsymmetrischen Belastung, d. h. insbesondere bei der Abweichung von der symmetrischen Belastung, kann eine elektrische Belastung der Phasenleiter und/oder von an die Phasenleiter angeschlossenen Komponenten verstanden werden, die ungleich auf die Phasenleiter verteilt ist. Beispielsweise kann jeder der Phasenleiter eine andere phasenspezifische Leistungsgröße aufweisen. Beim Erkennen der Abweichung von der symmetrischen Belastung können die Leistungsgrößen unter Berücksichtigung der netzspezifischen Grenzbedingung miteinander verglichen werden. Beispielsweise kann die Abweichung erkannt werden, wenn eine Leistungsgröße eines der Phasenleiter von den Leistungsgrößen, insbesondere in Abhängigkeit von der Grenzbedingung, abweicht.

Unter der netzspezifischen Grenzbedingung kann insbesondere eine Bedingung verstanden werden, welche eine Eigenschaft des Stromnetzes und/oder eine Auswirkung einer Änderung der Leistungsgrößen auf das Stromnetz berücksichtigt. Beispielsweise kann eine plötzliche Änderung der Leistungsgrößen zu Rückkopplungseffekten im Stromnetz führen, die durch die Grenzbedingung verhindert oder reduziert werden können. Es ist denkbar, dass mehrere Grenzbedingungen definiert sind, die beim Erkennen der Abweichung berücksichtigt werden.

Beim Bestimmen der Leistungsdaten können die Sollleistungen zur zumindest teilweisen oder vollständigen Kompensation der Abweichung berechnet werden, um anschließend die Leistungselektronik anhand der Leistungsdaten anzusteuern. Die Sollleistungen können dabei über die Phasenleiter unsymmetrisch festgelegt werden, um der Abweichung entgegenzuwirken. Vorzugsweise können die Sollleistungen ferner in Abhängigkeit von einer Summenleistung über die Phasenleiter bestimmt werden. Dadurch kann sichergestellt werden, dass die gewünschte Gesamtleistung bereitgestellt wird. Beispielsweise können die Sollleistungen invers zu der Abweichung der erfassten Leistungsgrößen von der symmetrischen Belastung bestimmt werden. Unter dem Ansteuern der Leistungselektronik kann eine Steuerung und/oder Regelung der Leistungselektronik, insbesondere durch die Steuereinheit, verstanden werden. Dabei kann die Leistungselektronik unsymmetrisch und gegensätzlich zu der Abweichung angesteuert werden, um eine zumindest teilweise Kompensation der Abweichung zu erwirken. Insbesondere können die Leistungsdaten beim Ansteuern der Leistungselektronik über die Stromrichtervorrichtung eingeregelt werden. Somit kann es sich bei dem Ansteuern der Leistungselektronik um eine Gegenmaßnahme zu der Abweichung der Leistungsgrößen von der symmetrischen Belastung handeln. Insbesondere kann die Belastung des Stromnetzes dadurch zumindest teilweise symmetriert werden. Die Leistungsdaten, insbesondere die Sollleistungen, und/oder die Leistungsgrößen können beispielsweise in einem direkten Zusammenhang mit den gemessenen Spannungen der einzelnen Phasenleiter stehen.

Es ist somit im Rahmen der vorliegenden Erfindung erkannt worden, dass durch eine lokale Unsymmetrie einer unsymmetrischen Belastung des Stromnetzes gegengesteuert werden kann, wenn die Unsymmetrie auf die Abweichung abgestimmt ist und die netzspezifische Grenzbedingung erfüllt ist. Dabei wird insbesondere die Möglichkeit der Regelung der phasenbezogenen Leistung einer mehrphasigen Energiebereitstellung dazu genutzt, bedarfsweise den Verteilernetzverhältnissen angepasst, unsymmetrisch Leistung aus dem Stromnetz zu beziehen und/oder zurückzuspeisen. Dadurch kann die Netzübertragungsfähigkeit durch das Verfahren erhöht werden, um beispielsweise geringere Anforderungen an den Netzausbau zu bewirken. Ferner kann das Verfahren zur Verbesserung der Spannungsqualität in dem Stromnetz führen.

Weiterhin ist es bei einem erfindungsgemäßen Verfahren denkbar, dass die Grenzbedingung ein Zeitintervall, in welchem die Abweichung auftritt, und/oder eine Mindestabweichung, insbesondere der Abweichung und/oder der Leistungsgrößen untereinander, umfasst. Durch die Definition des Zeitintervalls und/oder der Mindestabweichung kann ein unerwünschtes Schwingungsverhalten des Stromnetzes verhindert werden. Durch die Vorgabe des Zeitintervalls kann beispielsweise verhindert werden, dass kurzfristige Peaks in den Leistungsgrößen zu einer starken Gegenreaktion der Stromrichtervorrichtung führen. Durch die Mindestabweichung kann ferner verhindert werden, dass kleinere Änderungen der Leistungsgrößen eine unmittelbare Nachregelung durch die Stromrichtervorrichtung zur Folge haben. Mit dem Zeitintervall und/oder der Mindestabweichung kann somit vorgesehen sein, dass nur länger anhaltenden und/oder für die Netzauslastung bedeutenden Abweichungen von der symmetrischen Belastung gegengesteuert wird. Dadurch kann die Netzstabilität beim Ansteuern der Leistungselektronik zum Ausgleichen der Abweichung verbessert werden.

Es ist ferner bei einem erfindungsgemäßen Verfahren denkbar, dass das Erfassen der Leistungsgrößen durch phasenspezifische Sensoren zum Messen der Leistungsgrößen erfolgt. Es kann beispielsweise vorgesehen sein, dass jedem der Phasenleiter zumindest einer oder genau einer der Sensoren zugeordnet ist, um die jeweilige phasenspezifische Leistungsgröße zu erfassen. Dadurch können die erfassten Leistungsgrößen den Phasenleitern eindeutig zugeordnet werden. Beispielsweise können die Sensoren als Strom- und/oder Spannungssensor ausgestaltet sein. Vorzugsweise können die Sensoren in ein Ladesystem zum Laden eines Fahrzeuges und/oder in ein Fahrzeugsystem des Fahrzeuges integriert sein. Beispielsweise können die Sensoren in die Stromrichtervorrichtung, vorzugsweise in den Gleichrichter, integriert sein. Dabei können die Sensoren zur Leistungssteuerung genutzt werden. Somit können vorhandene Sensoren in einem System für das Erfassen der Leistungsgrößen genutzt werden und/oder den Sensoren kann eine mehrfache Nutzung zukommen. Dadurch kann die Stromrichtervorrichtung in einfacher Art und Weise für das Ausführen des Verfahrens nachrüstbar sein.

Weiterhin kann bei einem erfindungsgemäßen Verfahren vorteilhafterweise vorgesehen sein, dass das Bereitstellen der Energie an einem Anschluss des Stromnetzes zur Entnahme der Energie aus dem Stromnetz und/oder zur Rückspeisung der Energie in das Stromnetz erfolgt. Bei der Entnahme der Energie kann die Energie zum Betreiben eines Verbrauchers genutzt werden. Bei der Rückspeisung der Energie kann die Energie beispielsweise durch einen lokalen Energieerzeuger, wie z. B. eine Photovoltaik-Anlage, eine Windkraftanlage, an das Stromnetz und/oder einen Verbraucher abgegeben werden. Darüber hinaus ist es denkbar, dass ein Fahrzeug zur Rückspeisung der Energie, beispielsweise zur Netzstabilisierung, genutzt wird. Insbesondere kann das Verfahren beim bidirektionalen Bereitstellen von Energie durchführbar sein.

Es ist ferner bei einem erfindungsgemäßen Verfahren denkbar, dass das Erfassen der phasenspezifischen Leistungsgrößen und/oder das Ansteuern der Leistungselektronik kontinuierlich erfolgen. Unter dem kontinuierlichen Erfassen der Leistungsgrößen kann verstanden werden, dass die Leistungsgrößen während des Betriebs wiederholt, d. h. insbesondere in regelmäßigen Abständen und/oder permanent, erfasst und vorzugsweise gespeichert werden. Dadurch kann ein zeitabhängiger Verlauf der Leistungsgrößen, insbesondere phasenspezifisch, erfasst werden, um beispielsweise zu prüfen, ob die Grenzbedingung erfüllt ist. Unter dem kontinuierlichen Ansteuern der Leistungselektronik kann verstanden werden, dass eine kontinuierliche Regelung der Stromrichtervorrichtung in Abhängigkeit von den Leistungsdaten erfolgt. Dabei können die Leistungsdaten, vorzugsweise von den einzelnen Phasenleitern, in Abhängigkeit von dem Erfassen der Leistungsgrößen kontinuierlich variieren oder zumindest temporär konstant sein. Das Erkennen der Abweichung und/oder das Bestimmen der Leistungsdaten kann ebenfalls kontinuierlich erfolgen. Es ist jedoch ebenso denkbar, dass das Erkennen der Abweichung und/oder das Bestimmen der Leistungsdaten anlassbezogen und/oder situativ ausgeführt wird. Beispielsweise kann vorgesehen sein, dass das Bestimmen der Leistungsdaten nur dann ausgeführt wird, wenn eine Abweichung unter Berücksichtigung der Grenzbedingung erkannt wird.

Ferner kann bei einem erfindungsgemäßen Verfahren vorteilhafterweise vorgesehen sein, dass die Leistungsgrößen Phasenspannungen umfassen, wobei beim Erkennen der Abweichung ein Vergleich der Phasenspannungen erfolgt und/oder beim Bestimmen der Leistungsdaten die Sollleistungen als Funktion der Phasenspannungen berechnet werden. Die Phasenspannungen können ein vorteilhafter Indikator für eine Spannungsqualität im Stromnetz und/oder an der Stromrichtervorrichtung sein. Insbesondere kann bei einer hohen Phasenspannung an einem der Phasenleiter auf eine phasenspezifisch niedrige Auslastung des Stromnetzes, bei einer niedrigen Phasenspannung auf eine hohe Auslastung des Stromnetzes geschlossen werden. Bei der Entnahme der Energie aus dem Stromnetz und/oder der Rückspeisung der Energie in das Stromnetz kann dabei dem Phasenleiter mit der höchsten Phasenspannung die niedrigste Sollleistung und dem Phasenleiter mit der niedrigsten Phasenspannung die höchste Sollleistung zugeordnet werden. Dadurch kann die Abweichung von der symmetrischen Spannung und Belastung anhand unterschiedlicher Phasenleistungen lokal ausgeglichen werden.

Es ist ferner bei einem erfindungsgemäßen Verfahren denkbar, dass die Funktion eine lineare, eine quadratische und/oder eine exponentielle Funktion umfasst und/oder dass eine Nutzerschnittstelle, insbesondere der Steuereinheit und/oder der Stromrichtervorrichtung, zur Einstellung der Funktion vorgesehen ist. Die Nutzerschnittstelle kann vorteilhafterweise eine situationsspezifische Anpassung der Funktion erlauben. Beispielsweise kann ein Mitarbeiter eines Netzbetreibers über die Nutzerschnittstelle das Bestimmen der Leistungsdaten parametrieren, um spezifisch für das jeweilige Stromnetz ein vorteilhaftes Verhalten der Stromrichtervorrichtung herbeizuführen. Insbesondere kann durch die Ausgestaltung der Funktion als lineare, quadratische und/oder exponentielle Funktion, insbesondere mit entsprechenden Zeitkonstanten, eine ungünstige Systemreaktion der Stromrichtervorrichtung beim Ansteuern der Leistungselektronik beeinflusst werden. Wenn die Funktion eine exponentielle Funktion umfasst, kann die Abweichung z. B. schnell und/oder stark kompensiert werden, wogegen eine lineare Funktion eine gemäßigte eine mittlere Kompensation nach sich ziehen kann.

Vorzugsweise kann bei einem erfindungsgemäßen Verfahren vorgesehen sein, dass das Bestimmen der Leistungsdaten und/oder das Ansteuern der Leistungselektronik in Abhängigkeit von einer Änderungsvorgabe zum Anpassen der Phasenspannungen erfolgt, insbesondere wobei die Leistungsgrößen Phasenströme umfassen. Die Änderungsvorgabe kann beispielsweise eine Spannungsänderung der Phasenspannungen, insbesondere in Form einer Rampenfunktion, umfassen. Insbesondere können die Sollleistungen anhand der Änderungsvorgabe als Funktion der Phasenspannung berechnet werden. Schnellen Spannungsänderungen im Stromnetz kann dabei durch langsame Leistungsänderungen entgegengewirkt werden. Dadurch kann die lokale Netzwächter-Funktionalität und die Systemstabilität verbessert sein. Zum Erfassen der Phasenströme kann die Stromrichtervorrichtung phasenspezifische Stromsensoren aufweisen. Die Phasenspannungen und Phasenströme können dazu jeweils zwischen den Phasenanschlüssen und dem Neutralleiter gemessen werden.

Ferner kann bei einem erfindungsgemäßen Verfahren vorteilhafterweise vorgesehen sein, dass eine, insbesondere situationsspezifische, Netzvorgabe des Stromnetzes zur Begrenzung der Sollleistungen erhalten wird, die beim Bestimmen der Leistungsdaten und/oder beim Ansteuern der Leistungselektronik berücksichtigt wird. Bei der situationsspezifischen Netzvorgabe kann es sich um eine Anforderung des Stromnetzes handeln. Beispielsweise kann die Netzvorgabe eine Information über eine maximale Gesamtleistung der Stromrichtervorrichtung und/oder eine Information über eine Symmetrie der Sollleistungen umfassen. Die Netzvorgabe kann beispielsweise in Form eines externen Signals, insbesondere durch die Steuereinheit, erhalten werden. Dadurch kann der Betrieb der Stromrichtervorrichtung situationsadäquat netzseitig beeinflusst werden. Wird beispielsweise an einem externen Netzknoten festgestellt, dass eine bestimmte Symmetrie oder Unsymmetrie für die Netzstabilität vorteilhaft ist, kann durch die Netzvorgabe die diese Symmetrie oder Unsymmetrie an der Stromrichtervorrichtung angefordert und zumindest teilweise oder vollständig eingeregelt werden.

Im Rahmen der Erfindung ist es weiterhin denkbar, dass eine maximale Leistungsspreizung für die Sollleistungen vorgegeben und beim Bestimmen der Leistungsdaten berücksichtigt wird. Die maximale Leistungsspreizung kann beispielsweise netzspezifisch sein. Zur Definition der Leistungsspreizung kann ein Leistungskorridor vorgegeben werden, innerhalb dessen ein Sollwert für eine Gesamtleistung und/oder für die einzelnen Phasenleistungen bestimmt wird. Unter der maximalen Leistungsspreizung kann eine maximale Leistungsdifferenz zwischen den Phasenleitern und/oder den phasenspezifischen Leistungsgrößen verstanden werden. Die maximale Leistungsspreizung der Sollleistungen, d. h. insbesondere zwischen den Phasenleitern, kann relativ oder absolut vorgegeben sein. Beispielsweise kann die maximale Leistungsspreizung in Form einer absoluten Vorgabe 5 kW oder weniger, vorzugsweise 4,6 kW oder 3,7 kW betragen. Die maximale Leistungsspreizung in Form einer relativen Vorgabe kann z. B. in Prozent von der maximalen Leistungsgröße vorgegeben werden. Durch die Vorgabe der maximalen Leistungsspreizung kann sichergestellt werden, dass die durch zum Ausgleich der Abweichung in das Stromnetz induzierte Unsymmetrie innerhalb des vordefinieren Rahmens erfolgt. Dadurch können unerwünschte Nebeneffekte und/oder unbeabsichtigte Verschlechterungen der Spannungsqualität im Stromnetz reduziert oder vermieden werden.

Weiterhin ist es bei einem erfindungsgemäßen Verfahren denkbar, dass die Leistungselektronik einen mehrphasig ansteuerbaren Gleichrichter zur Umwandlung einer Wechselspannung des Stromnetzes in eine Gleichspannung umfasst. Insbesondere kann der Gleichrichter als phasenselektiver Gleichrichter ausgestaltet sein. Beispielsweise kann der Gleichrichter ein DC-Wandler einer Ladevorrichtung zum Laden eines Fahrzeuges sein. Vorzugsweise sind die phasenspezifischen Sensoren zum Messen der Leistungsgrößen in den Gleichrichter integriert.

Vorzugsweise kann bei einem erfindungsgemäßen Verfahren vorgesehen sein, dass das Bereitstellen der Energie zum Laden einer Fahrzeugbatterie eines Fahrzeuges erfolgt, wobei das Verfahren zumindest teilweise oder vollständig durch eine Steuereinheit des Fahrzeuges ausgeführt wird. Bei der Fahrzeugbatterie kann es sich insbesondere um eine Traktionsbatterie des Fahrzeuges handeln. Somit kann das Verfahren insbesondere zum Lademanagement beim Laden der Fahrzeugbatterie ausgeführt werden. Gerade beim Laden des Fahrzeuges können hohe Ladeleistungen abgerufen werden, die einen Einfluss auf die regionale Stabilität des Stromnetzes ausüben können. Es kann vorgesehen sein, dass das Verfahren gleichzeitig durch mehrere Fahrzeuge, beispielsweise durch eine Fahrzeugflotte, ausgeführt wird, um den Einfluss auf die Netzstabilität des Stromnetzes zu verbessern. Dabei kann vorgesehen sein, dass die Fahrzeuge untereinander kommunizieren, um das Bestimmen der Leistungsdaten und/oder eine Anpassung der Grenzbedingung in Abhängigkeit von einer Abstimmung der Fahrzeuge untereinander durchzuführen. Durch eine fahrzeugseitige Ausführung des Verfahrens kann die durch das Verfahren erreichbare Netzstabilisierung an jedem Ladeort, insbesondere unabhängig von dessen Ausstattung, durchgeführt werden. Es kann vorgesehen sein, dass eine Nachrüstung eines bestehenden Fahrzeuges, welches eine mehrphasig ansteuerbare Leistungselektronik aufweist, über ein Software-Update erfolgen kann.

Gemäß einem weiteren Aspekt der Erfindung ist ein Computerprogrammprodukt vorgesehen, das Befehle umfasst, die bei einer Ausführung durch eine Steuereinheit die Steuereinheit veranlassen, ein erfindungsgemäßes Verfahren auszuführen.

Somit bringt ein erfindungsgemäßes Computerprogrammprodukt die gleichen Vorteile mit sich, wie sie bereits ausführlich mit Bezug auf ein erfindungsgemäßes Verfahren beschrieben worden sind. Bei dem Verfahren kann es sich insbesondere um ein computerimplementiertes Verfahren handeln. Das Computerprogrammprodukt kann als computerlesbarer Anweisungscode implementiert sein. Ferner kann das Computerprogrammprodukt auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Ferner kann das Computerprogrammprodukt in einem Netzwerk wie beispielsweise dem Internet bereitstellbar oder bereitgestellt sein, von dem es bei Bedarf von einem Nutzer heruntergeladen oder online ausgeführt werden kann. Das Computerprogrammprodukt kann sowohl mittels einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert sein.

Gemäß einem weiteren Aspekt der Erfindung ist ein System vorgesehen, das eine Stromrichtervorrichtung aufweist. Die Stromrichtervorrichtung umfasst eine mehrphasig ansteuerbare Leistungselektronik. Das System umfasst ferner phasenspezifische Sensoren zum Messen von Leistungsgrößen. Weiterhin weist das System eine Steuereinheit zum Ausführen eines erfindungsgemäßen Verfahrens auf.

Somit bringt ein erfindungsgemäßes System die gleichen Vorteile mit sich, wie sie bereits ausführlich mit Bezug auf ein erfindungsgemäßes Verfahren und/oder ein erfindungsgemäßes Computerprogrammprodukt beschrieben worden sind. Das System kann ferner mehrere Phasenleiter und/oder ein Stromnetz aufweisen. Es kann vorgesehen sein, dass die Phasenleiter in die Stromrichtervorrichtung integriert und/oder an die Stromrichtervorrichtung angeschlossen sind. Die Sensoren und/oder die Steuereinheit können vorteilhafterweise in die Stromrichtervorrichtung integriert sein. Ferner ist es denkbar, dass die Steuereinheit beispielsweise in ein Fahrzeug integriert ist und die Stromrichtervorrichtung, insbesondere mit den Sensoren, in eine Ladevorrichtung, z. B. in Form einer Wall-Box und/oder einer Ladesäule, zum Laden des Fahrzeuges. Dabei können die Stromrichtervorrichtung und die Steuereinheit zum Ausführen des Verfahrens, vorzugsweise über einen Ladestecker der Ladevorrichtung, in Kommunikationsverbindung bringbar sein.

Gemäß einem weiteren Aspekt der Erfindung ist ein Fahrzeug vorgesehen. Das Fahrzeug weist ein erfindungsgemäßes System auf.

Somit bringt ein erfindungsgemäßes Fahrzeug die gleichen Vorteile mit sich, wie sie bereits ausführlich mit Bezug auf ein erfindungsgemäßes Verfahren, ein erfindungsgemäßes Computerprogrammprodukt und/oder ein erfindungsgemäßes System beschrieben worden sind. Bei dem Fahrzeug handelt es sich vorzugsweise um ein Kraftfahrzeug, insbesondere in Form eines Hybridfahrzeuges und/oder eines Elektrofahrzeuges. Beim Ausführen des Verfahrens kann die Energie zum Laden einer Fahrzeugbatterie, insbesondere in Form einer Traktionsbatterie, des Fahrzeuges geladen werden. Insbesondere wird das Verfahren bei dem Fahrzeug vollständig fahrzeugseitig ausgeführt. Ferner kann die Steuereinheit in ein zentrales Steuergerät des Fahrzeuges integriert sein. Es ist jedoch ebenso denkbar, dass die Steuereinheit in ein dezentrales Steuergerät der Stromrichtervorrichtung und/oder der Fahrzeugbatterie integriert ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: ein erfindungsgemäßes Verfahren in schematischer Darstellung von Verfahrensschritten,
- Figur 2: ein erfindungsgemäßes Fahrzeug mit einem erfindungsgemäßen System zum Ausführen des Verfahrens,
- Figur 3: phasenspezifische Leistungsgrößen bei dem Verfahren, und
- Figur 4: ein Ansteuern einer Leistungselektronik des Systems in Abhängigkeit von einer Änderungsvorgabe.
- Figur 5: ein Fahrzeug mit einem erfindungsgemäßen System zum Ausführen des Verfahrens in einem weiteren Ausführungsbeispiel,

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

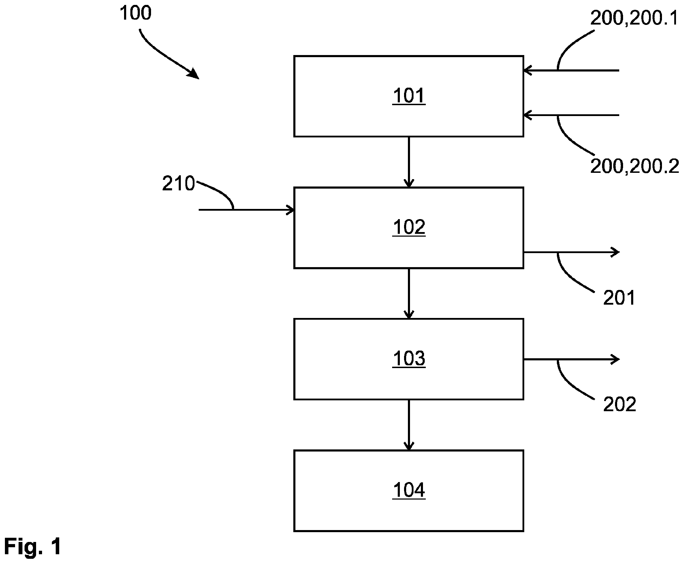

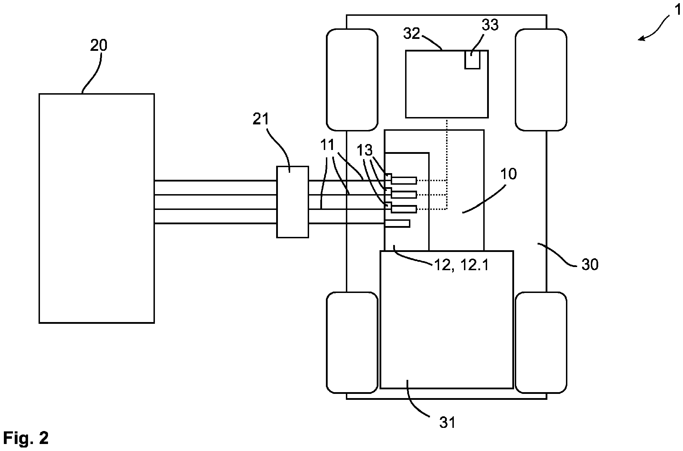

Figur 1 zeigt ein erfindungsgemäßes Verfahren 100 zum Energiemanagement bei einem Bereitstellen von elektrischer Energie über eine, hier in Figur 2 gezeigte, Stromrichtervorrichtung 10 in einem ersten Ausführungsbeispiel. Das Bereitstellen der Energie kann an einem Anschluss 21 eines Stromnetzes 20 zur Entnahme der Energie aus dem Stromnetz 20 und/oder zur Rückspeisung der Energie in das Stromnetz 20 erfolgen.

Ein erfindungsgemäßes System 1, welches die Stromrichtervorrichtung 10 und mehrere Phasenleiter 11 aufweist, ist in Figur 2 gezeigt. Die Stromrichtervorrichtung 10 weist eine mehrphasig ansteuerbare Leistungselektronik 12 auf, die über die Phasenleiter 11 an das Stromnetz 20 angeschlossen ist. Weiterhin weist das System 1 eine Steuereinheit 32 zum Ausführen des Verfahrens 100 auf. Dazu kann ein Computerprogrammprodukt vorgesehen sein, das Befehle umfasst, die bei einer Ausführung durch die Steuereinheit 32 die Steuereinheit 32 veranlassen, das Verfahren 100 auszuführen.

Gemäß Figur 2 ist das System 1 mit der Steuereinheit 32 vollständig in ein erfindungsgemäßes Fahrzeug 30 integriert, so dass das Verfahren 100 fahrzeugseitig ausgeführt werden kann. Dabei erfolgt das Bereitstellen der Energie zum Laden einer Fahrzeugbatterie 31 des Fahrzeuges 30. Durch die fahrzeugseitige Ausführung des Verfahrens 100 kann das Verfahren 100 ortsunabhängig beim Laden der Fahrzeugbatterie 31 ausgeführt werden.

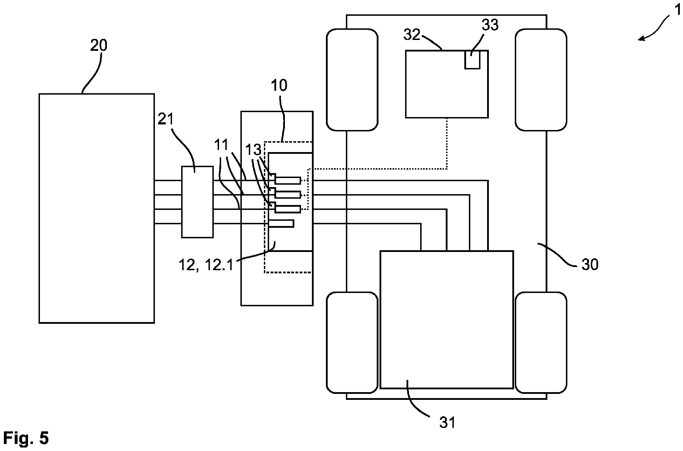

Es ist jedoch ebenso denkbar, dass das System 1 nicht oder nur teilweise in das Fahrzeug 30 integriert ist. Beispielsweise zeigt Figur 5 ein Fahrzeug 30, bei dem die Steuereinheit 32 in ein zentrales Steuergerät des Fahrzeuges 30 integriert ist, während die Stromrichtervorrichtung 10 in eine Ladevorrichtung zum Laden des Fahrzeuges 30 integriert ist.

Wie in den Figuren 2 und 5 gezeigt, umfasst die Leistungselektronik 12 der Stromrichtervorrichtung 10 einen mehrphasig ansteuerbaren Gleichrichter 12.1 zur Umwandlung einer Wechselspannung des Stromnetzes 20 in eine Gleichspannung, um die Fahrzeugbatterie 31 durch das Stromnetz 20 zu laden.

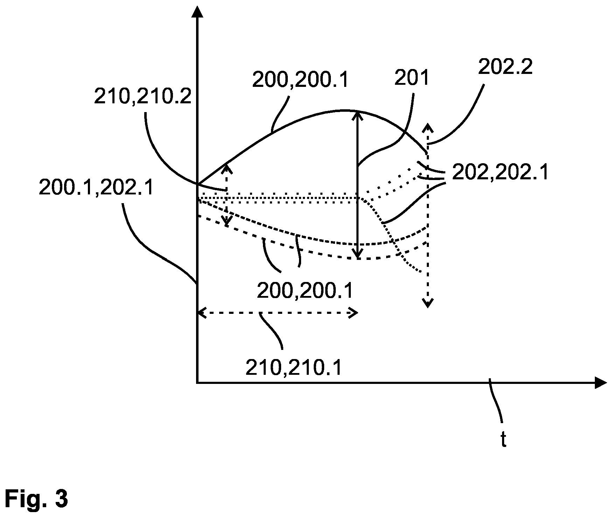

Wie in Figur 1 gezeigt, erfolgt bei dem Verfahren 100 ein Erfassen 101 jeweils zumindest einer phasenspezifischen Leistungsgröße 200 für jeden der Phasenleiter 11 beim Bereitstellen der Energie. Dazu weist das System 1 insbesondere phasenspezifische Sensoren 13 zum Messen der Leistungsgrößen 200 auf. Die Leistungsgrößen 200 umfassen vorzugsweise Phasenspannungen 200.1, die insbesondere einen Indikator für eine Netzstabilität des Stromnetzes 20 darstellen. Zusätzlich oder alternativ können die Leistungsgrößen 200 Phasenströme 200.2 der Phasenleiter 11 umfassen. Vorzugsweise erfolgt das das Erfassen 101 der phasenspezifischen Leistungsgrößen 200 kontinuierlich. Dadurch kann bei dem Verfahren 100 ein Verlauf der Leistungsgrößen 200 über eine Zeit t, wie in Figur 3 gezeigt, aufgezeichnet und weiterverarbeitet werden.

Weiterhin wird bei dem Verfahren 100 ein Erkennen 102 einer Abweichung 201 von einer symmetrischen Belastung der Phasenleiter 11 anhand der Leistungsgrößen 200 und zumindest einer netzspezifischen Grenzbedingung 210 für die Abweichung 201 ausgeführt, die in Figur 3 dargestellt ist. Beim Erkennen 102 der Abweichung 201 kann ein Vergleich der erfassten Phasenspannungen 200.1 durchgeführt werden. Die Grenzbedingung 210 umfasst ein Zeitintervall 210.1, in welchem die Abweichung 201 auftritt, und/oder eine Mindestabweichung 210.2 der Leistungsgrößen 200 untereinander. Das Zeitintervall 210.1 kann beispielsweise anhand des Verlaufes der Leistungsgrößen 200 überprüft werden. Durch die Grenzbedingungen 210, 210.1, 210.2 kann eine negative Beeinflussung des Stromnetzes 20, z. B. durch ein Induzieren von Schwingungen, reduziert oder vollständig verhindert werden. Vorzugsweise wird die Abweichung 201 als solche erst dann erkannt, wenn alle, d. h. hier beide, Grenzbedingungen 210, 210.1, 210.2 erfüllt sind.

In Abhängigkeit von der Abweichung 201 wird ferner ein Bestimmen 103 von Leistungsdaten 202, die für jeden der Phasenleiter 11 eine abzurufende Sollleistung 202.1 umfassen, ausgeführt. Wie in Figur 3 erkennbar ist, erfolgt eine Anpassung der Sollleistungen 202.1 nachdem die Abweichung 201 unter Erfüllung der Grenzbedingungen 210, 210.1, 210.2 erkannt wurde. Dabei werden die Sollleistungen 202.1, derart bestimmt, dass die Sollleistungen 202.1 das Stromnetz 20 und die Phasenleiter 11 entgegengesetzt zu der erkannten Abweichung 201 unsymmetrisch belasten, um die Abweichung 201 zumindest teilweise zu kompensieren. Dabei kann beispielsweise durch eine der Sollleistungen 202.1 an einem hochbelasteten Phasenleiter 11 eine niedrigere Leistung abgerufen werden, als durch die beiden anderen Sollleistungen 202.1 an den anderen beiden Phasenleitern 11, die im Stromnetz 20 weniger belastet sind. Dadurch kann die Gesamtlast an den Phasenleitern 11 zumindest teilweise symmetrisiert werden, wodurch, insbesondere bei gleicher Gesamtleistung, eine verbesserte Netzauslastung des Stromnetzes 20 ermöglicht wird. Vor der Anpassung der Sollleistungen 202.1 belasten die Sollleistungen 202.1 die Phasenleiter 11 und das Stromnetz 20 insbesondere symmetrisch. Beim Bestimmen der Leistungsdaten 202 wird vorzugsweise eine maximale Leistungsspreizung 202.2 für die Sollleistungen 202.1 berücksichtigt, um die erzwungene, lokale Unsymmetrie zu begrenzen. Beim Bestimmen 103 der Leistungsdaten 202 können die Sollleistungen 202.1 ferner als Funktion der Phasenspannungen 200.1 berechnet werden. Beispielsweise kann die Funktion eine lineare, eine quadratische und/oder eine exponentielle Funktion umfassen. Weiterhin ist es vorteilhaft, wenn die Stromrichtervorrichtung 10 eine Nutzerschnittstelle 33 zur Einstellung der Funktion umfasst.

In Abhängigkeit von den Leistungsdaten 202 erfolgt bei dem Verfahren 100 ferner ein Ansteuern 104 der Leistungselektronik 12 der Stromrichtervorrichtung 10. Das Ansteuern 104 der Leistungselektronik 12 erfolgt vorzugsweise kontinuierlich, um eine permanent Regelung zu ermöglichen. Je nach Situation können die Sollleistungen 202.1 dabei jedoch temporär konstant gehalten werden.

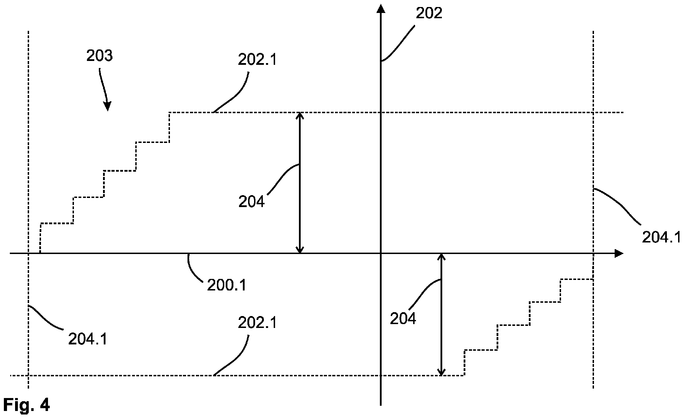

Wie in Figur 4 gezeigt, können das Bestimmen 103 der Leistungsdaten 202 und/oder das Ansteuern 104 der Leistungselektronik 12 bei der Entnahme der Energie aus dem Stromnetz 20 und/oder beim Rückspeisen der Energie in das Stromnetz 20 in Abhängigkeit von einer Änderungsvorgabe 203 zum Anpassen der Phasenspannungen 200.1 und/oder einer Netzvorgabe 204 erfolgen. Dadurch kann, insbesondere in Abhängigkeit von einer Vorgabe 204.1 für die Nennspannung, eine Gesamtleistung und/oder eine zeitabhängige Leistungsänderung begrenzt werden. Um die Netzkontrolle des Stromnetzes 20 weiter zu verbessern kann die, insbesondere situationsspezifische, Netzvorgabe 204 des Stromnetzes 20 zur Begrenzung der Sollleistung 202.1 bei dem Verfahren 100 erhalten werden, die beim Bestimmen 103 der Leistungsdaten 202 und/oder beim Ansteuern 104 der Leistungselektronik 12 berücksichtigt wird.

Somit kann durch eine lokale, durch die Stromrichtervorrichtung 10 erzeugte Unsymmetrie an den Phasenleitern 11 einer unsymmetrischen Belastung des Stromnetzes 20 entgegengesteuert werden, indem die lokal erzeugte Unsymmetrie der Sollleistungen 202.1 auf die Abweichung 201 abgestimmt ist. Die netzspezifische Grenzbedingung 210 sorgt dabei dafür, dass Nebeneffekte auf das Stromnetz 20 reduziert oder vermieden werden können. Dadurch kann die Netzübertragungsfähigkeit durch das Verfahren 100 erhöht werden, um geringere Anforderungen an den Netzausbau des Stromnetzes 20 zu bewirken, die gerade beim Laden einer Vielzahl von Fahrzeugen 30 entstehen können. Eine vollständige Implementierung des Verfahrens 100 in das Fahrzeug 30 bietet daher den Vorteil, dass die positiven Auswirkungen auf das Stromnetz 20 zumindest im Wesentlichen ortsunabhängig ermöglicht werden. Dadurch kann das Verfahren 100 insgesamt zur Verbesserung der Spannungsqualität in dem Stromnetz 20 führen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezuaszeichenliste

- 1: System

- 10: Stromrichtervorrichtung
- 11: Phasenleiter
- 12: Leistungselektronik
- 12.1: Gleichrichter
- 13: Sensoren

- 20: Stromnetz
- 21: Anschluss

- 100: Verfahren
- 101: Erfassen
- 102: Erkennen
- 103: Bestimmen
- 104: Ansteuern

- 30: Fahrzeug
- 31: Fahrzeugbatterie
- 32: Steuereinheit
- 33: Nutzerschnittstelle

- 200: Leistungsgröße
- 200.1: Phasenspannungen
- 200.2: Phasenströme
- 201: Abweichung
- 202: Leistungsdaten
- 202.1: Sollleistung
- 202.2: Leistungsspreizung
- 203: Änderungsvorgabe
- 204: Netzvorgabe
- 210: Grenzbedingung
- 210.1: Zeitintervall
- 210.2: Mindestabweichung

- t: Zeit

## Patentansprüche

1. Verfahren (100) zum Energiemanagement bei einem Bereitstellen von elektrischer Energie über eine Stromrichtervorrichtung (10) mit einer mehrphasig ansteuerbaren Leistungselektronik (12), die über mehrere Phasenleiter (11) an ein Stromnetz (20) angeschlossen ist,
umfassend:
- Erfassen (101) jeweils zumindest einer phasenspezifischen Leistungsgröße (200) für jeden der Phasenleiter (11) beim Bereitstellen der Energie,
- Erkennen (102) einer Abweichung (201) von einer symmetrischen Belastung der Phasenleiter (11) anhand der Leistungsgrößen (200) und zumindest einer netzspezifischen Grenzbedingung (210) für die Abweichung (201),
- Bestimmen (103) von Leistungsdaten (202), die für jeden der Phasenleiter (11) eine abzurufende Sollleistung (202.1) umfassen, in Abhängigkeit von der Abweichung (201),
- Ansteuern (104) der Leistungselektronik (12) der Stromrichtervorrichtung (10) in Abhängigkeit von den Leistungsdaten (202).

2. Verfahren (100) nach Anspruch 1,
**dadurch gekennzeichnet,**
**dass** die Grenzbedingung (210) ein Zeitintervall (210.1), in welchem die Abweichung (201) auftritt, und/oder eine Mindestabweichung (210.2) umfasst.

3. Verfahren (100) nach Anspruch 1 oder 2,
**dadurch gekennzeichnet,**
**dass** das Erfassen (101) der Leistungsgrößen (200) durch phasenspezifische Sensoren (13) zum Messen der Leistungsgrößen (200) erfolgt.

4. Verfahren (100) nach einem der vorhergehenden Ansprüche,
**dadurch gekennzeichnet,**
**dass** das Bereitstellen der Energie an einem Anschluss (21) des Stromnetzes (20) zur Entnahme der Energie aus dem Stromnetz (20) und/oder zur Rückspeisung der Energie in das Stromnetz (20) erfolgt.

5. Verfahren (100) nach einem der vorhergehenden Ansprüche,
**dadurch gekennzeichnet,**
**dass** das Erfassen (101) der phasenspezifischen Leistungsgrößen (200) und/oder das Ansteuern (104) der Leistungselektronik (12) kontinuierlich erfolgen.

6. Verfahren (100) nach einem der vorhergehenden Ansprüche,
**dadurch gekennzeichnet,**
**dass** die Leistungsgrößen (200) Phasenspannungen (200.1) umfassen, wobei beim Erkennen (102) der Abweichung (201) ein Vergleich der Phasenspannungen (200.1) erfolgt und/oder beim Bestimmen (103) der Leistungsdaten (202) die Sollleistungen (202.1) als Funktion der Phasenspannungen (200.1) berechnet werden.

7. Verfahren (100) nach Anspruch 6,
**dadurch gekennzeichnet,**
**dass** die Funktion eine lineare, eine quadratische und/oder eine exponentielle Funktion umfasst und/oder dass eine Nutzerschnittstelle (33) zur Einstellung der Funktion vorgesehen ist.

8. Verfahren (100) nach einem der vorhergehenden Ansprüche,
**dadurch gekennzeichnet,**
**dass** das Bestimmen (103) der Leistungsdaten (202) und/oder das Ansteuern (104) der Leistungselektronik (12) in Abhängigkeit von einer Änderungsvorgabe (203) zum Anpassen der Phasenspannungen (200.1) erfolgt, insbesondere wobei die Leistungsgrößen (200) Phasenströme (200.2) umfassen.

9. Verfahren (100) nach einem der vorhergehenden Ansprüche,
**dadurch gekennzeichnet,**
**dass** eine, insbesondere situationsspezifische, Netzvorgabe (204) des Stromnetzes (20) zur Begrenzung der Sollleistungen (202.1) erhalten wird, die beim Bestimmen (103) der Leistungsdaten (202) und/oder beim Ansteuern (104) der Leistungselektronik (12) berücksichtigt wird.

10. Verfahren (100) nach einem der vorhergehenden Ansprüche,
**dadurch gekennzeichnet,**
**dass** eine maximale Leistungsspreizung (202.2) für die Sollleistungen (202.1) vorgegeben und beim Bestimmen (103) der Leistungsdaten (202) berücksichtigt wird.

11. Verfahren (100) nach einem der vorhergehenden Ansprüche,
**dadurch gekennzeichnet,**
**dass** die Leistungselektronik (12) einen mehrphasig ansteuerbaren Gleichrichter (12.1) zur Umwandlung einer Wechselspannung des Stromnetzes (20) in eine Gleichspannung umfasst.

12. Verfahren (100) nach einem der vorhergehenden Ansprüche,
**dadurch gekennzeichnet,**
**dass** das Bereitstellen der Energie zum Laden einer Fahrzeugbatterie (31) eines Fahrzeuges (30) erfolgt, wobei das Verfahren (100) vollständig durch eine Steuereinheit (32) des Fahrzeuges (30) ausgeführt wird.

13. Computerprogrammprodukt umfassend Befehle, die bei einer Ausführung durch eine Steuereinheit (32) die Steuereinheit (32) veranlassen, ein Verfahren (100) nach einem der vorhergehenden Ansprüche auszuführen.

14. System (1) aufweisend
eine Stromrichtervorrichtung (10) mit einer mehrphasig ansteuerbaren Leistungselektronik (12),
phasenspezifische Sensoren (13) zum Messen von Leistungsgrößen (200), und
eine Steuereinheit (32) zum Ausführen eines Verfahrens (100) nach einem der vorhergehenden Ansprüche.

15. Fahrzeug (30) aufweisend
ein System (1) nach dem vorhergehenden Anspruch.
